(19) Europäisches Patentamt
European Patent Office
Office européen des brevets

(11) **EP 1 862 839 B2**

(12) ## NEUE EUROPÄISCHE PATENTSCHRIFT
Nach dem Einspruchsverfahren

(45) Veröffentlichungstag und Bekanntmachung des Hinweises auf die Entscheidung über den Einspruch:
**26.02.2020 Patentblatt 2020/09**

(45) Hinweis auf die Patenterteilung:
**08.02.2012 Patentblatt 2012/06**

(21) Anmeldenummer: **07010431.0**

(22) Anmeldetag: **25.05.2007**

(51) Int Cl.:
**G02B 21/16** (2006.01)      **G02B 21/00** (2006.01)

(54) **Mikroskop mit erhöhter Auflösung**

Microscope with improved resolution

Microscope à résolution améliorée

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **31.05.2006 DE 102006026204**

(43) Veröffentlichungstag der Anmeldung:
**05.12.2007 Patentblatt 2007/49**

(73) Patentinhaber: **Carl Zeiss Microscopy GmbH 07745 Jena (DE)**

(72) Erfinder: **Kempe, Michael 07751 Jena (DE)**

(74) Vertreter: **Patentanwälte Geyer, Fehners & Partner mbB Perhamerstrasse 31 80687 München (DE)**

(56) Entgegenhaltungen:
DE-A1- 10 056 382      DE-A1- 10 105 391
DE-A1- 10 340 965      DE-A1-102004 032 953
US-A1- 2002 141 052

• KLAR T A ET AL.: "Breaking Abbe's diffraction resolution limit in fluorescence microscopy with stimulated emission depletion beams of various shapes" PHYSICAL REVIEW E. STATISTICAL PHYSICS, PLASMAS, FLUIDS, AND RELATED INTERDISCIPLINARY TOPICS, AMERICAN INSTITUTE OF PHYSICS, NEW YORK, NY, US, Bd. 64, Nr. 6, 26. November 2001 (2001-11-26), Seiten 66613-1, XP002305574 ISSN: 1063-651X

• N. BOKOR ET AL.: "Investigation of polarization effects for high-numerical-aperture first-order Laguerrw-Gaussian beams by 2D scanning with a single fluorescent microbead" OPTICS EXPRESS, Bd. 13, Nr. 26, 26. Dezember 2005 (2005-12-26), Seiten 10440-10447, XP002450216

• O. HAEBERLÉ, B. SIMON: "Improving the lateral resolution in confocal fluorescence microscopy using laterally interfering excitation beams" OPTICS COMMUNICATIONS, Bd. 259, 15. März 2006 (2006-03-15), Seiten 400-408, XP002450217

• Takeshi Watanabe et al: "Two-color far-field super-resolution microscope using a doughnut beam", Chem. Phys. Lett., vol. 371, 2003, pages 634-639,

• Török P. et al.; "The Use of Gauss-Laguerre Vector Beams in STED Microscopy"; Optics Express; 26 Jul. 2004; pp. 3605-3617; vol. 12, No. 15; Optical Society of America; USA.

• T. Watanabe et al: "Generation of a Doughnut-shaped beam using a spiral phase plate", Rev. Sei. Instrum., vol. 75, no. 5131, 2004,

• Eugen Hecht: "Optik, 2. Nachdruck", 1992, Addison-Wesley GmbH, Deutschland ISBN: 3-925118-86-1

• Engel et al.; "Creating /./3 focal holes with a MachZehnder interferometer"; Applied Physics B77: Lasers and Optics; Aug. 2003; pp. 11-17; No. 1; Springer Berlin; Heidelberg, Finland.

• Klar Thomas A. et al: "Fluorescence microscopy with diffraction resolution barrier broken by stimulated emission", PNAS, vol. 97, no. 15, 2000, pages 8206-8210,

• Klar Thomas A.: "Progress in Stimulated Emission Depletion Microscopy", Dissertation, Univ. Heidelberg, 2001

**EP 1 862 839 B2**

- Satoshi Habuchi et al: "Reversible single-molecule photo switching in the GFPlike fluorescent protein Dronpa", PNAS, vol. 102, no. 27, 2005, pages 9511-9516,
- Delmar S. Larsen et al: "Photoisomerization and Photoionization of the Photoactive Yellow Protein Chromophore in Solution", Biophysical Journal, vol. 86, no. 4, April 2004 (2004-04), pages 2538-2550,
- Tadday et al. "New laser system for measurements of dissociation rates of small molecules with picosecond temporal resolution," 1998, Proceedings of SPIE, vol. 3271, pp. 210-218.
- Marsh et al., "Stimulated emission depletion following two photon excitation," 2002, Proceedings of SPIE, vol. 4812. pp. 45-54.
- Heel S.W. et al: "Concepts for nanoscale resolution in fluorescence microscopy", Current Opinion in Neurobiology, 14, 599-609, (2004)
- Hell et al.; "Ground-state-depletion Fluorescence Microscopy: A Concepts for Breaking the Diffraction Resolution"; Applied Physics B: Lasers and Optics; May 1995; pp. 495-497; vol. 60, No. 5; Springer Berlin; Heidelberg, Finland.
- Willig K.I. et al: "STED microscopy reveals that synaptotagmin remains clustered after synaptic vesicle exocytosis", Nature, vol. 440, 13 April 2006 (2006-04-13), pages 935-939,
- Klar Thomas A. et al: "Subdiffraction resolution in far-field fluorescence microscopy", Optics Letters, vol. 24, no. 14, 1999, pages 954-956,
- Watanabe T. et al: "Two-point-separation in super-resolution fluorescence microscope based on up-conversion fluorescence depletion technique", Opt Express, vol. 11, no. 24, 1 December 2003 (2003-12-01), pages 3271-3276,
- Bergmann, Schaefer: Lehrbuch der Experimentalphysik, Band III, Optik, 8. Auflage, 1987

**Beschreibung**

Es sind Verfahren zur Steigerung der optischen Auflösung im Fernfeld über die beugungsbegrenzte Auflösung bekannt, die auf einer nichtlineare Wechselwirkung von Licht mit der Probe basieren . Dazu gehört die Mikroskopie mittels Stimulated Emission Depletion (STED, US 5,731,588), mittels Grundzustandsentvölkerung (Ground State Depletion - GSD, Hell and Kroug, Appl. Phys. B 60 (1995), 495-497) und das optische Modifizieren (Schalten) von fluoreszierenden Substanzen (US 2004/0212799 A1).

In beiden Fällen wird mittels einer beugungsbegrenzten optischen Lichtverteilung (Abregungslicht) durch eine nichtlineare Wechselwirkung eine beugungsbegrenzte Anregungsverteilung so modifiziert, dass nur von einer Subregion Lichtemission erfolgen kann. Diese Subregion (effektive Point Spread Function : PSF) kann dabei in allen drei Raumrichtungen oder nur in lateraler Richtung eingeschränkt sein. Sinnvolle Beschränkungen der PSF's sind hierbei:

> 1. 3D-Beschränkung des Anregungsvolumens
> 2. Laterale Beschränkung des Anregungsvolumens bei erweiterter Tiefenschärfe

Der in Bezug auf die Steilheit der Gradienten wenig effiziente Stand der Technik ist dabei durch die Verwendung von Phasenmasken in der Pupille des Abregungslichtes mit radialem Phasensprung (Literatur: /1/ T. A. Klar, S. Jakobs, M. Dyba, A. Egner, and S.W. Hell, Proc. Natl. Acad. Sci. U.S.A. 97, 8206 (2000)) bzw. durch Phasenmasken mit quadrantenweisem Phasensprung (Literatur: /2/ E. Engel et al. Appl. Phys. B 77, 11-17 (2003)) gegeben.

Die Verwendung von Spiralmasken für die STED Mikroskopie wurde in Ref. /3/ P. Török and P.R.T. Munro. Opt.Expr. 12 (2004), 3605 vorgeschlagen. Allerdings erzeugt die Verwendung einer Spiralmaske wie in der obigen Literatur beschrieben weder eine in allen Raumrichtungen beschränkte Anregungsverteilung noch eine solche mit erweiterter Tiefenschärfe wie im Folgenden beschrieben.

Die inkohärente Überlagerung zweier Teilstrahlengänge des Abregungslichts ist aus der Druckschrift T.A. Klar et al., Physical Review E, Volume 64, 066613, 2001 bekannt.

Es ist Aufgabe der Erfindung, Verfahren zu realisieren , die entsprechende Verteilungen vergleichsweise einfach und mit hoher Effizienz (gegeben durch die Steilheit der Gradienten der Verteilungen) erzeugen lassen.

Diese Aufgabe wird durch die Merkmale der unabhängigen Ansprüche gelöst.

Im Vergleich zu Erzeugung der Verteilungen durch die Superposition vieler Punktquellen (Literatur: US 5,866,911 A1) sind die folgenden Lösungen deutlich einfacher. Außerdem wird eine viel effizientere 3D-Beschränkung möglich.

Folgende Realisierungen erfolgen erfindungsgemäss:

> 1. Anregung: konventionelle PSF Abregung: inkohärente Überlagerung einer Verteilung mit Spiralphase in Pupille mit einer mit Radialphase in Pupille
> 2. Anregung: inkohärente Überlagerung von konventioneller PSF mit einer mit Radialphase in Pupille Abregung: inkohärente Überlagerung einer Verteilung mit Spiralphase in Pupille und einer mit Spiralphase + Radialphase

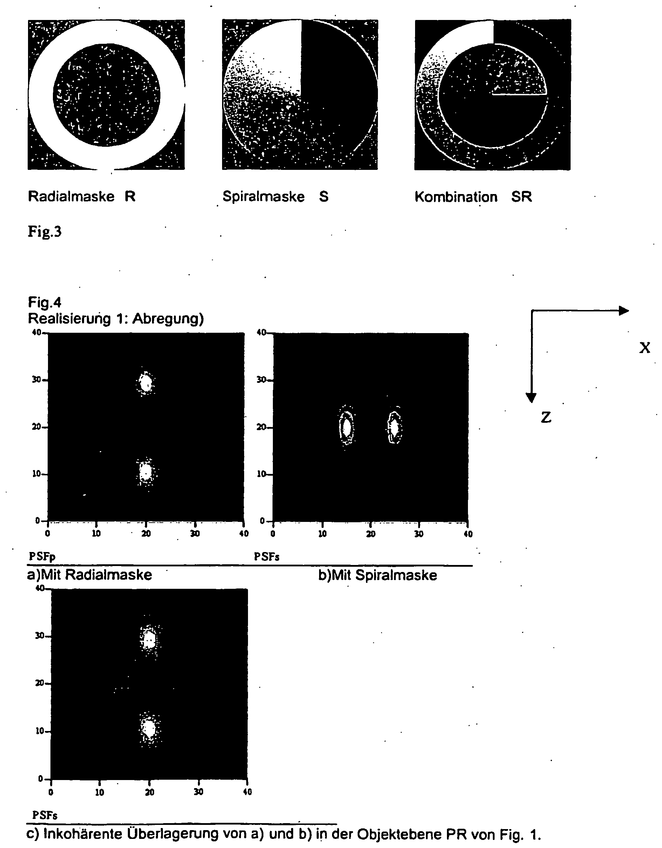

Fig.3 zeigt eine Radialmaske ( a), eine Spiralmaske(b) und eine Kombination aus Radial- und Spiralmaske ( c), wobei die Kombination als Hintereinanderstellung von a) und b) oder als fertiges Grauwertdesign denkbar ist. Hierbei sind Phasenwerte grauwertkodiert (weiß = 0, schwarz =2π):

$$R(r) = \exp(-j\pi) \text{ for } r < a/\sqrt{2}$$

$$S(\phi) = \exp(-j\phi)$$

$$SR(r,\phi) = R(r) + S(\phi)$$

mit $r$. Radialkoordinate und $\phi$ : Winkelkoordinate in der Pupille ($\alpha$: Pupillenradius)

Die folgenden Anordnungen unterscheiden zwischen Anregungs- und Abregungsstrahl und beziehen sich beispielhaft auf STED unter Verwendung kurzer Pulse. In diesem Fall erfolgt zuerst die Anregung und danach mit zeitlicher Verzögerung die Abregung durch stimulierte Emission wie aus dem Stand der Technik bekannt. Die verbliebenen angeregten Moleküle relaxieren unter Emission von Fluoreszenz, die detektiert wird.

Ebenso lassen sich diese Anordnungen aber auch für weitere Verfahren zur Hochauflösung wie a) Ground-State-Depletion (Lit.: S.W. Hell and M. Kroug, Appl. Phys.B 60 (1995) 495) oder b) dem Schalten von Farbstoffen (US2004/0212799 A1) verwenden. In a) wird zunächst durch wiederholte Anregung Farbstoff in den Triplettzustand gebracht, wozu der Abregungsstrahl benutzt wird. Der im Grundzustand verbliebene Anteil des Farbstoffs wird dann durch den Anregungsstrahl angeregt und die Fluoreszenz detektiert. In b) werden durch den Abregungsstrahl Moleküle geschalten und dadurch in einen nichtfluoreszierenden Zustand versetzt. Anschließend erfolgt mit dem Anregungsstrahl die Anregung der Moleküle, wobei die im fluoreszierenden Zustand verbliebenen Moleküle Fluoreszenz abgeben können, die detektiert wird. In beiden Fällen ist die Verwendung von gepulstem Licht (wie bei STED) für den Anregungs- und Abregungsstrahl nicht erforderlich.

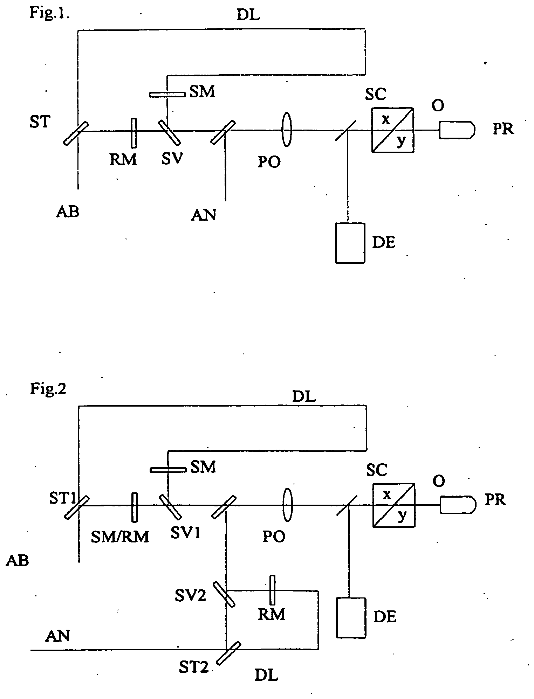

Beschreibung der Figuren 1 und 2:

Die Bezugzeichen bedeuten für beide Figuren:

AN:     Anregungsstrahlengang
AB:     Abregungsstrahlengang
DE      Detektor
SC:     Scanner
O:      Objektiv
ST:     Strahlteiler
SV:     Strahlvereiniger
PO :    Pupillenoptik
DL :    Delay zur Verlängerung des Lichtweges
SM :    Spiralmaske
RM :    Radialmaske
PR :    Probe

In Fig. 1 erfolgt eine Anregung AN mittels einer üblichen PSF beispielsweise eines Punktscanners über die PO,SC und O in Richtung PR.
Der Abregungsstrahlengang AB wird mittels eines Strahlteilers ST in zwei Strahlen aufgespalten. Der eine Strahlengang mit Delay DL ( wobei die Länge der Verlängerung, ggf. über Lichtleitfasern, über der Kohärenzlänge der verwendeten Laser liegt) enthält SM, der andere enthält RM, wobei das Delay für eine inkohärente Überlagerung beider Teilstrahlen hinter SV sorgt. Über die Optik PO werden die Masken in die oder in die Nähe einer Objektivpupille abgebildet.

In Fig. 2 liegt ein ähnlicher Abregungsstrahlengang AB wie in Fig. 1 vor, wobei RM durch die Kombinationsmaske RM/SM ersetzt ist. Der Anregungsstrahlengang AN wird ebenfalls mittels ST2 in zwei Strahlengänge aufgeteilt. In dem Teilstrahlengang mit DL befindet sich eine Radialmaske RM, die in die Objektivpupille oder in deren Nähe abgebildet wird. Das Delay DL sorgt für die inkohärente Überlagerung der Teilstrahlen hinter SV2.

Das Delay muß größer als die Kohärenzlänge der Quelle sein, was bei hochkohärenten Lasern nur sinnvoll mit Fasern zu lösen ist. Eine weitere Möglichkeit der inkohärenten Überlagerung besteht in der Verwendung von Licht leicht verschiedener Wellenlänge (innerhalb des Anregungsspektrums für Fluoreszenz (GSD) / für Schalten bzw. des Emissionsspektrums (STED)). Dies ist insbesondere bei cw Lasern die bevorzugte Ausführung. So kann z.B. für das Schalten und die Anregung des Proteins Dronpa sowohl Licht bei 488 nm als auch bei 477 nm benutzt werden. Somit kann im Abregungsstrahlengang in Anordnung 1 Licht bei 488 nm von der Spiralmaske und solches bei 477 nm von der Radialmaske geformt und unter Verwendung geeigneter dichroitischer Strahlteiler kombiniert werden. Analoges gilt für Anregungs- und Abregungsstrahlengang in Anordnung 2.
Die Pupillenabbildung muss eine stationäre Phasenverteilung in der Pupillenebene des Objektivs erzeugen.
Unabhängig von der Art der Probenwechselwirkung werden Anregungs- und Abregungsstrahl in der Regel zeitlich nacheinander auf die Probe treffen. Entweder wird mit dem Abregungsstrahl die Probe "präpariert" und anschließend mit dem Anregungsstrahl der präparierte Zustand "abgefragt" (GSD und Schalten), oder die Anregung wird durch einen zeitlich verzögerten Abregungsstrahl modifiziert (STED).

Dadurch ist eine inkohärente Überlagerung von Anregungs- und Detektionsstrahl gewährleistet.

Im Weiteren dargestellt sind jeweils Schnitte entlang der lateralen Koordinate (horizontal) und der axialen Koordinate (vertikal), wobei die Verteilungen rotationssymmetrisch bezüglich der axialen (optischen) Achse sind

Fig. 4 zeigt die entstehenden Verteilungen bei der Abregung und der Realisierung gemäß des ersten Ausführungsbeispieles in Fig.1.
Zu sehen ist, dass eine dreidimensionale Beschränkung desjenigen Gebietes im Fokus (Objektebene PR in Fig.1) (in der Mitte von Fig. 4 c)auftritt, in dem keine Abregungsstrahlung vorliegt.

Fig.5 zeigt die entstehende Verteilung bei der Abregung gemäß Fig.2
Zu sehen ist, dass in der Objektebene PR (5c) ein in axialer Richtung ausgedehntes, lateral beschränktes Gebiet auftritt, in dem keine Abregungsstrahlung vorliegt.

Fig.6 zeigt die Verteilung der Anregung in Fig.2
Zu sehen ist, dass in Fig. 6c) in der Objektebene PR eine im Vergleich zur normalen PSF (Fig. 6b) langgestreckte Anregungslichtverteilung entsteht.

Simulationsergebnisse

Die für das Ausschalten verwendete $PSF_s$ (in Gl. (1) als auf 1 normiert angenommen) führt zu einer Reduktion der Anregbarkeit (oder der Anregung) des Farbstoffs entsprechend

$$A(x,y,z) = \exp\{-\sigma \cdot D \cdot PSF_s(x,y,z)\} \qquad (1)$$

wobei $\sigma$ den Wirkungsquerschnitt des Schaltens (oder der Abregung) und D die Bestrahlungsenergie pro Fläche bezeichnet. Die sich aus der Anregung mit einer $PSF_a$ ergebende Gesamt-PSF ist dann

$$PSF(x,y,z) = A(x,y,z) \cdot PSF_a(x,y,z) \qquad (2)$$

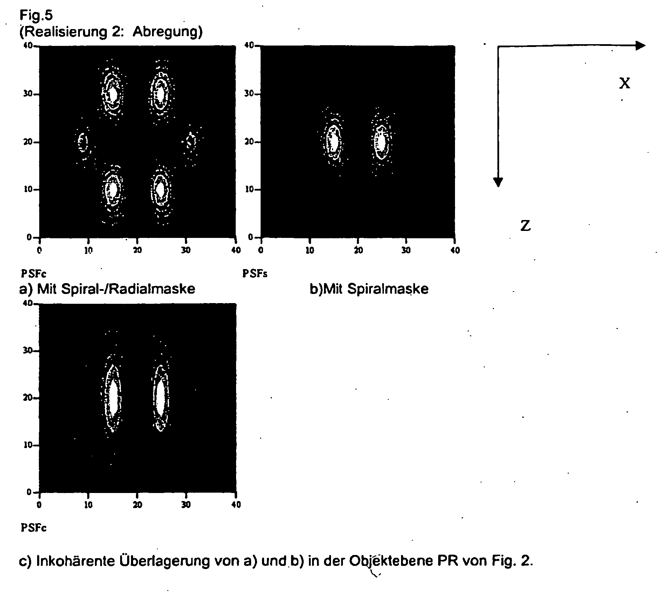

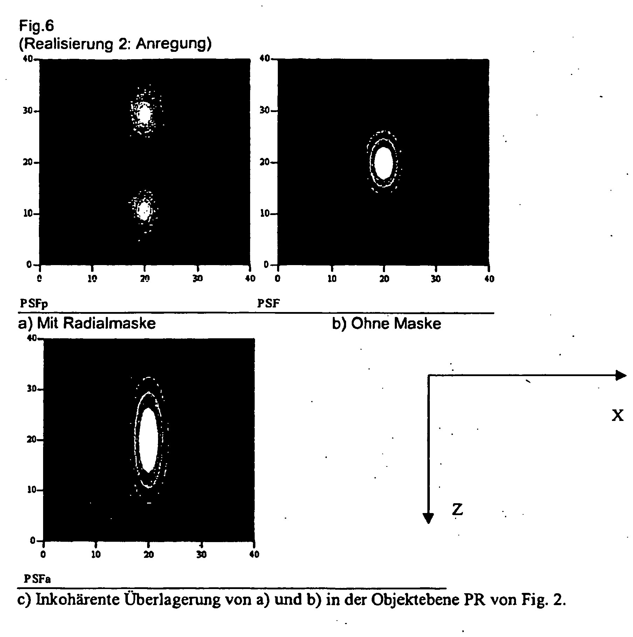

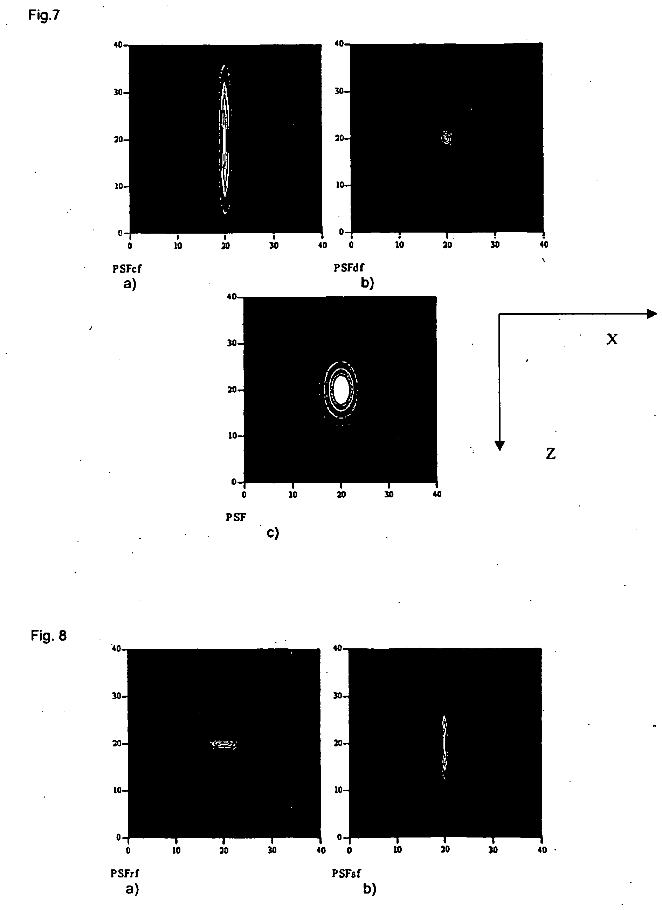

Unten sind x-z Schnitte durch die PSF für den Fall des schaltbaren Proteins Dronpa gezeigt (lateral = horizontal, axial = vertikal). Dabei wurde das Ausschalten mit einem Wirkungsquerschnitt von 0.07 cm$^2$/mW/s angenommen (Literatur: S. Habuchi et al. Proc. Natl. Acad. Sci. U.S.A. 102, 9511 (2005)). Für eine Bestrahlungsenergie von 3 W/cm$^2$ s (d.h. z.B. 3 mW in 10 $\mu$s auf 1 $\mu$m$^2$ fokussiert) ergeben sich dann für die Realisierung 2 (mit der Abregung entsprechend Fig. 5c) und der Anregung entsprechend Fig. 6c)) die Verteilung Fig. 7a) und für die Realisierung 1 (mit der Abregung entsprechend Fig. 4c) und der Anregung entsprechend Fig. 6b)) die Verteilung Fig. 7b) im Vergleich zur konventionellen PSF (Fig. 7c).

Zum Vergleich sei weiterhin die unter gleichen Umständen erhaltene Verteilung nach dem Stand der Technik, nämlich mit einer Maske mit radialem Phasensprung (Fig. 8a)) bzw. mit Spiralmaske (Fig. 8b)) im Abregungsstrahlengang, gezeigt. Es ist deutlich zu erkennen, dass man im Fall 8a) zwar eine axiale, aber keine akzeptable laterale Beschränkung der PSF erhält. Als Folge davon ist die Auflösung nur in axialer Richtung signifikant verbessert. Im Fall 8b) gilt das analoge mit Bezug auf eine ausschließlich laterale Verbesserung der Auflösung. Im Gegensatz zu Fig. 7a) liegt hier auch keine applikativ relevante Erweiterung der Tiefenschärfe vor.

**Patentansprüche**

1. Mikroskop mit erhöhter Auflösung durch teilweise räumliche Überlagerung in der Beleuchtung durch einen Anregungsstrahl und einen Abregungsstrahl und/oder einen Umschaltstrahl in einer fluoreszierenden Probe, mit einem Laser zur Erzeugung eines Anregungsstrahlengangs (AN) zur Beleuchtung der Probe (PR) und mit einem Laser zur Erzeugung eines Abregungsstrahlengangs (AB) bzw. eines Umschaltstrahlengangs zur Beleuchtung der Probe (PR), mit einem Scanner (SC) und mit einem Objektiv (O), sowie mit einem Detektor (DE) zur Detektion des Probenlichtes, wobei der Anregungsstrahlengang (AN) und der Abregungsstrahlengang (AB) bzw. Umschaltstrahlengang über den Scanner (SC) und über das Objektiv (O) zur scannenden Abtastung der Probe (PR) verläuft, und im Abregungsstrahlengang (AB) bzw. Umschaltstrahlengang ein Strahlteiler (ST) zur Aufspaltung des Abregungsstrahlenganges (AB) bzw. Umschaltstrahlengangs in zwei Teilstrahlengänge und ein Strahlvereiniger (SV) zur Überlagerung der aufgespalteten Teilstrahlengänge angeordnet ist, **dadurch gekennzeichnet, dass** in einem der Teilstrahlengänge des Abregungsstrahlengang (AB) bzw. Umschaltstrahlengangs zur inkohärenten Überlagerung der Teilstrahlengänge eine Verlängerung (DL) des Lichtwegs angeordnet ist und sich in diesem Teilstrahlengang eine Spiralphasenmaske (SM) befindet und im anderen Teilstrahlengang des Abregungsstrahlengang (AB) bzw. Umschaltstrahlengangs eine Phasenmaske mit radialem Phasensprung (RM), oder eine Kombination (SM/RM) aus einer Phasenmaske mit radialem Phasensprung und einer Spiralphasenmaske angeordnet ist und die Masken in oder in der Nähe der Pupillenebene des Objektivs (O) liegen oder eine Pupillenoptik (PO) zur Abbildung in die Pupillenebene des Objektivs vorhanden ist.

**2.** Mikroskopisches Verfahren mit erhöhter Auflösung unter Verwendung eines Mikroskops nach Anspruch 1, wobei eine fluoreszierende Probe zeitlich nacheinander mit dem Anregungsstrahl und dem Abregungsstrahl oder Umschaltstrahl beleuchtet wird.

**Claims**

**1.** Microscope with increased resolution through partial spatial superposition in the illumination through an excitation beam and a de-excitation beam and/or a switching beam in a fluorescent sample, with a
laser for producing an excitation beam path (AN) for illuminating a sample (PR) and with
a laser for producing a de-excitation beam path (AB) or a switching beam path for illuminating the sample (PR), with a scanner (SC) and with an
objective (0), and also with
a detector (DE) for detecting the sample light, with
the excitation beam path (AN) and the de-excitation beam path (AB) or switching beam path running via the scanner (SC) and via the objective (O) for scanning sampling of the sample (PR),
and a beamsplitter (ST) for splitting the de-excitation beam path (AB) or switching beam path into two partial beam paths and a beam unifier (SV) for superposing the split partial beam paths being arranged in the de-excitation beam path (AB) or switching beam path,
**characterized in that**
an extension (DL) of the light path for incoherent superposition of the partial beam paths is arranged in one of the partial beam paths of the de-excitation beam path (AB) or switching beam path and a spiral phase mask (SM) is situated in this partial beam path
and a phase mask with a radial phase jump (RM), or a combination (SM/RM) of a phase mask with a radial phase jump and a spiral phase mask, is arranged in the other partial beam path of the de-excitation beam path (AB) or switching beam path and the masks are situated in or in the vicinity of the pupil plane of the objective (O) or there is a pupil optical system (PO) for imaging into the pupil plane of the objective.

**2.** Microscopic method with an improved resolution, using a microscope according to Claim 1, wherein a fluorescent sample is, in chronological succession, illuminated by the excitation beam and the de-excitation beam or switching beam.

**Revendications**

**1.** Microscope à résolution accrue par superposition spatiale partielle dans l'éclairage par un rayon excitant et un rayon désexcitant et/ou par un rayon de commutation dans un échantillon fluorescent, comportant
un laser pour générer une trajectoire de rayon excitant (AN) pour l'éclairage de l'échantillon (PR) et
un laser pour générer une trajectoire de rayon désexcitant (AB) ou une trajectoire de rayon de commutation pour éclairer l'échantillon (PR), comprenant
un scanner (SC) et
un objectif (O), ainsi
qu'un détecteur (DE) pour la détection de la lumière de l'échantillon,
la trajectoire de rayon excitant (AN) et la trajectoire de rayon désexcitant (AB) ou la trajectoire de rayon de commutation passant par le scanner (SC) et l'objectif (O) pour balayer l'échantillon (PR) en le scannant,
et un diviseur de rayon (ST) permettant de scinder la trajectoire de rayon désexcitant (AB) ou la trajectoire de rayon de commutation en deux sous-trajectoires de rayon et un réunisseur de rayon (SV) permettant de superposer les sous-trajectoires de rayon scindées étant disposés dans la trajectoire de rayon désexcitant (AB) ou la trajectoire de rayon de commutation, **caractérisé en ce que**,
dans une des sous-trajectoires de rayon de la trajectoire de rayon désexcitant (AB) ou de la trajectoire de rayon de commutation, est disposé un prolongement (DL) de la voie lumineuse permettant la superposition incohérente des sous-trajectoires de rayon et un masque de phase spiralé (SM) se trouve dans cette sous-trajectoire de rayon
et, dans l'autre sous-trajectoire de rayon de la trajectoire de rayon désexcitant (AB) ou de la trajectoire de rayon de commutation, est disposé un masque de phase à saut de phase radial (RM) ou une combinaison (SM/RM) d'un masque de phase à saut de phase radial et d'un masque de phase spiralé, et les masques se trouvent dans ou à proximité du plan de la pupille de l'objectif (O) ou une optique de pupille (PO) destinée à la reproduction dans le plan de la pupille de l'objectif est disponible.

2. Procédé microscopique à définition accrue en utilisant un microscope selon la revendication 1, un échantillon fluorescent étant exposé successivement dans le temps au rayon excitant et au rayon désexcitant ou au rayon ultrasonore.

Radialmaske  R        Spiralmaske  S        Kombination  SR

**Fig.3**

**Fig.4**
**Realisierung 1: Abregung)**

PSFp                           PSFs
a)Mit Radialmaske              b)Mit Spiralmaske

PSFs

c) Inkohärente Überlagerung von a) und b) in der Objektebene PR von Fig. 1.

**Fig.5**
(Realisierung 2: Abregung)

PSFc
a) Mit Spiral-/Radialmaske

PSFs
b)Mit Spiralmaske

PSFc

c) Inkohärente Überlagerung von a) und b) in der Objektebene PR von Fig. 2.

**Fig.6**
(Realisierung 2: Anregung)

PSFp

PSF

a) Mit Radialmaske

b) Ohne Maske

X

Z

PSFa

c) Inkohärente Überlagerung von a) und b) in der Objektebene PR von Fig. 2.

Fig.1.

Fig.2

Fig.7

PSFcf
a)

PSFdf
b)

PSF
c)

X

Z

Fig. 8

PSFrf
a)

PSFsf
b)

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 5731588 A
- US 20040212799 A1
- US 5866911 A1

### In der Beschreibung aufgeführte Nicht-Patentliteratur

- **HELL ; KROUG.** Ground State Depletion - GSD. *Appl. Phys. B,* 1995, vol. 60, 495-497
- **T. A. KLAR ; S. JAKOBS ; M. DYBA ; A. EGNER ; S.W. HELL.** *Proc. Natl. Acad. Sci. U.S.A.,* 2000, vol. 97, 8206
- **E. ENGEL et al.** *Appl. Phys. B,* 2003, vol. 77, 11-17
- **P. TÖRÖK ; P.R.T. MUNRO.** *Opt.Expr.,* 2004, vol. 12, 3605
- **T.A. KLAR et al.** *Physical Review E,* 2001, vol. 64, 066613
- **S.W. HELL ; M. KROUG.** *Appl. Phys.B,* 1995, vol. 60, 495
- **S. HABUCHI et al.** *Proc. Natl. Acad. Sci. U.S.A.,* 2005, vol. 102, 9511